# EUROPEAN PATENT APPLICATION

(11) **EP 4 650 846 A2**
(43) Date of publication of application: **19.11.2025**
(21) Application number: 25176358.7
(22) Date of filing: 14.05.2025
(51) Int. Cl.: G02B 6/44

(54) **FIBER MANAGEMENT STORAGE SYSTEM**

(30) Priority: 14.05.2024 US 202418663427
(71) Applicant: Google LLC, Mountain View, CA 94043 (US)
(72) Inventor: Poe, Charles, Mountain View, California, 94043 (US); Berg, Mathew, Mountain View, California, 94043 (US); Giersch, Aaron, Mountain View, California, 94043 (US)
(74) Representative: Betten & Resch

(57) **Abstract**

The present disclosure is generally directed to a unified fiber management storage system (600) that incorporates a removable splice cabinet (26A,B) into the back of an optical distribution frame (ODF) cabinet. The incorporation of the splice cabinet (26A,B) into the ODF cabinet results in a single system that can be installed and used within a data center, rather than multiple independent systems. Splice units (40) may be positioned within the splice cabinets (26A,B). Splice cassettes (42) are positioned within the splice units (40). The splice cassettes (42) are positioned vertically.

## Description

### BACKGROUND

Fiber management storage systems include a system for splicing fibers and a separate system for fibers that do not require splicing. Fibers that require splicing are stored in a splice cabinet for splicing. Fibers that do not require splicing are stored in a separate system to manage storage of pre-termination fiber slack. Fibers that do not require splicing are known as pre-termination fibers and are spliced by a manufacturer prior to use in a fiber management storage system. These fiber management systems require a point of entry (POE) room in data centers, which requires a significant amount of space. These systems also require connecting fibers from a data center server hall to a POE room. As a result, the POE rooms require various support systems for the routed fibers. The fiber management systems-a separate system for fibers that require splicing and another system for fibers that do not require splicing-require significant space, labor, and cost.

Additionally, conventional splice cabinets include splice cassettes oriented in a horizontal position and stacked vertically. This orientation results in unused space within the splice cabinet, further contributing to a lack of maximization of available space in fiber management storage systems.

### BRIEF SUMMARY

The present disclosure is generally directed to a fiber management storage system that combines a splice cabinet and an optical distribution frame (ODF) cabinet into one single system. By integrating the splice cabinet into the ODF cabinet, along with other components of the fiber management system, the combined system reduces space within the datacenter, labor associated with install and upkeep, and related costs. Within the system, the splice units and splice cassettes are positioned within a splice cabinet to maximize space. For example, rather than positioning the splice cassettes horizontally and stacking the splice cassettes vertically, the splice cassettes are positioned vertically and stacked horizontally. By changing the orientation of the splice cassettes to be vertical, the splice cassettes can more easily be inserted and removed, as there are no splice cassettes directly above or below the one being inserted and removed.

One aspect of the disclosure is directed to a tray body comprising a first surface, a second surface opposite the first surface, third and fourth surfaces coupled to at least one of the first or second surfaces, and a base surface coupled to one or more of the first, second, third, and fourth surfaces. The tray body may also comprise a cable entry point on at least one of the first, second, third, or fourth surfaces. The tray body may also comprise a first plurality of projections configured to secure a first set of cables. At least some of the first plurality of projections may extend towards a first midpoint, and the remaining projections of the first plurality of projections may extend away from the first midpoint. A distance from the first midpoint and the first surface may be greater than a distance from the first midpoint and the second surface. The tray body may also comprise a second plurality of projections configured to secure a second set of cables. At least some of the second plurality of projections may extend towards a second midpoint, and the remaining projections of the second plurality of projections may extend away from the second midpoint. A distance from the second midpoint and the second surface may be greater than a distance from the second midpoint and the first surface.

In some examples, the tray body may also comprise a splice sleeve holder between the first and second midpoints. The splice sleeve holder may be adapted to secure a splice point of inbound and outbound cables.

In some examples, the tray body may also comprise connection projections extending from an edge of the first, second, third, or fourth surface configured to secure a tray lid to the tray body.

Another aspect of the disclosure is directed to a splice cassette comprising a first surface having an extension configured to be inserted into a channel on a top ledge of a splice cabinet and a second surface having a recess configured to receive a raised portion on a bottom ledge of the splice cabinet. The splice cassette may be configured to be removably inserted into a splice unit within the splice cabinet. When the splice cassette is inserted into the splice unit, its extension and its recess may be configured to secure the splice cassette into the splice unit.

In some examples, the splice cassette may also comprise a third surface coupled to the first and second surfaces and a fourth surface coupled to the first surface and extending towards the second surface. A space between the second surface and an end of the fourth surface may define at least one cable entry point.

In some examples, the splice cassette may also comprise a tube clip covering the at least one cable entry point. The tube clip may be configured to secure cables.

In some examples, the splice cassette may additionally comprise a knob coupled to at least one of the first, second, third, or fourth surfaces. The knob may be adapted to engage with a hole in a splice cabinet to secure the splice cassette to at least one of the top or bottom ledges of the splice cabinet.

Another aspect of the disclosure is directed to a system comprising an optical distribution frame (ODF) cabinet having a first surface, a second surface opposite and substantially parallel to the first surface, and third and fourth surfaces coupled to and extending between the first and second surfaces. The system may also comprise a patch panel removably positioned within the ODF cabinet. The system may also comprise a splice cabinet removably positioned within the ODF cabinet. The splice cabinet may be positioned between the patch panel and one of the third and fourth surfaces of the ODF cabinet. The splice cabinet may comprise at least one splice unit configured to receive at least one splice cassette. The at least one splice cassette may be oriented in a vertical position.

In some examples, the at least one splice cassette may comprise a first surface, a second surface below and parallel to the first surface, and third and fourth surfaces coupled to at least one of the first and second surfaces of the at least one splice cassette. The at least one splice cassette may also comprise inbound cables extending from an inbound cable entry point. The inbound cables may be routed around a first midpoint so that the inbound cables are adjacent to the second, third, and fourth surfaces of the at least one splice cassette. The at least one splice cassette may also comprise inbound outbound cables extending from an outbound cable entry point. The outbound cables may be routed around a first midpoint so that the outbound cables are adjacent to the first, third, and fourth surfaces of the at least one splice cassette.

In some examples, the at least one splice cassette may comprise outbound and inbound cables inserted in a unidirectional position.

In some examples, the splice cabinet may also comprise a first surface, a second surface opposite and substantially parallel to the first surface of the splice cabinet, and a third surface coupled to and extending between the first and second surfaces of the splice cabinet. The splice cabinet may also comprise a top ledge with at least one channel extending from the third surface of the splice cabinet. The at least one channel may be adapted to receive an extension on the at least one splice cassette. The splice cabinet may also comprise a bottom ledge with a raised portion adapted to be received within a recess in the at least one splice cassette. The top and bottom ledges may be parallel to the first and second surfaces of the splice cabinet.

In some examples, the splice cabinet may also comprise a plurality of sets of top and bottom ledges in a vertical line adapted to support a respective splice unit between each set of top and bottom ledges.

In some examples, the system may also comprise a support extension removably couplable to the first surface of the ODF cabinet. The support extension may extend parallel to the first and second surfaces of the ODF cabinet and may be configured to support a breakout kit.

In some examples, the support extension may be configured to allow for an inbound cable to be routed in a direction from the first surface of the ODF cabinet to a second surface of the ODF cabinet.

In some examples, a section of the patch panel may comprise a first surface, a second surface opposite and substantially parallel to the first surface, a door hingedly connected to at least one of the first or second surfaces, and a track on at least one of the first and second surfaces. The track may be configured to slidably receive the door.

In some examples, the splice cabinet may comprise a plurality of inbound cable hoops between the patch panel and the at least one splice unit. The plurality of inbound cable hoops may be adapted to guide inbound cables between the patch panel and the at least one splice cassette.

In some examples, the splice cabinet may comprise a plurality of outbound cable hoops between the at least one splice unit and the third or fourth surfaces of the ODF cabinet. The plurality of outbound cable hoops may be adapted to guide outbound cables in an upward direction out of the ODF cabinet.

In some examples, the splice cabinet may comprise a plurality of top radius guides between the patch panel and the plurality of inbound cable hoops. The plurality of top radius guides may be adapted to support inbound cables around a bend.

In some examples, the system may also comprise one or more identifiers associated with the inbound or outbound cables and a corresponding section of the patch panel or at least one splice cassette. The one or more identifiers may provide an indication of the corresponding section of the patch panel or a corresponding splice cassette for the inbound or outbound cables. The one or more identifiers may also comprise at least one of an alphanumeric code, a color code, or a patterned code.

### BRIEF DESCRIPTION OF THE DRAWINGS

In the drawings, which are presented in simplified form and are not drawn to precise scale:
Figure 1A is a perspective back view of an ODF cabinet with a patch panel inserted, according to aspects of the disclosure.
Figure 1B is a perspective front view of a splice cabinet, according to aspects of the disclosure.
Figure 2 is a front perspective view of the ODF cabinet of Figure 1A, according to aspects of the disclosure.
Figure 3 is a back perspective view of the ODF cabinet of Figure 1A with the splice cabinet of Figure 1B inserted, according to aspects of the disclosure.
Figure 4A is a front plan view of the ODF cabinet of Figure 1A routing cables, according to an aspect of the disclosure.
Figure 4B is a front plan view of the ODF cabinet of Figure 1A routing cables, according to another aspect of the disclosure.
Figure 5 is a back plan view of a fiber management storage system, according to aspects of the disclosure.
Figure 6 is a front perspective view of the fiber management storage system of Figure 5, according to aspects of the disclosure.
Figures 7A-7D are side perspective views of a section of the patch panel of Figure 1A, according to aspects of the disclosure.
Figure 8 is a back plan view of a fiber management storage system connected to a second fiber management storage system, according to aspects of the disclosure.
Figure 9 is a front plan view of a splice unit within the fiber management storage system of Figure 5, according to aspects of the disclosure.
Figure 10 is a front view of a support extension connected to the fiber management storage system of Figure 5, according to aspects of the disclosure.
Figure 11 is a side view of the support extension of Figure 10, according to aspects of the disclosure.
Figure 12 is a side view of the support extension of Figure 10 with cables inserted, according to aspects of the disclosure.
Figure 13 is a perspective view of support extension and cables of Figure 12 with a support extension lid, according to aspects of the disclosure.
Figure 14 is a front view of cables with a mesh cloth, according to aspects of the disclosure.
Figure 15 is a perspective view of the tray body of Figure 18 and a tray lid, according to aspects of the disclosure.
Figure 16 is a perspective view of the splice cassette of Figure 16 slidably inserted into the splice cabinet of Figure 1B, according to aspects of the disclosure.
Figure 17A is a perspective view of a splice cassette with a visual identification system, according to aspects of the disclosure.
Figure 17B is a back plan view of the patch panel of Figure 1A with a visual identification system on the cables, according to aspects of the disclosure.
Figure 18 is the fiber management storage system of Figure 5 with a visual identification system on the cables and portions of the patch panel, according to aspects of the disclosure.

### DETAILED DESCRIPTION

The present disclosure is generally directed to a unified fiber management storage system that incorporates a removable splice cabinet into the back of an optical distribution frame (ODF) cabinet. The incorporation of the splice cabinet into the ODF cabinet results in a single system that can be installed and used within a data center, rather than multiple independent systems. Splice units may be positioned within the splice cabinets. Splice cassettes are positioned within the splice units. The splice cassettes are positioned vertically.

To accommodate fiber routing in the narrow spaces within the ODF cabinet, the system includes features to support the bending of cables. For example, the system may include a bracket system that is configured to smooth the bend of cables routed from outside of the ODF cabinet. Maintaining the bend radius and/or keeping a smooth bend mitigates the potential for internal reflectance of the propagating light within the cables. The splice cassette includes adjacent cable entry points to accommodate the vertical orientation of each splice cassette. For example, the entry points for the cables on the splice cassette are adjacent to allow for the entry points to be positioned on the same surface of the splice cassette and still be accessible when the splice cassette is within the ODF cabinet. In contrast, the entry points were previously on opposing sizes of the splice cassette as both sides of the splice cassette were accessible when the splice cassette was within the cabinet. The cables used in conjunction with the fiber management storage system may include a layer of polyvinyl chloride (PVC) for the portion of the cables positioned outside of the ODF cabinet and layers of nylon mesh for the portion of the cables positioned inside of the ODF cabinet. The stiffness of PVC protects cables from damage but is too stiff for routing the cables within the narrow spaces of the ODF cabinet. The nylon mesh portion on the cables inside of the ODF cabinet therefore improves flexibility for routing, as compared to PVC, while maintaining protection of the cables.

The fiber management system saves space by eliminating the need for a point of entry room in a data center. The orientation of splice units and splice cassettes may further contribute to a reduction of space by maximizing use in a narrow space within the ODF cabinet. Additionally, the unified system may reduce the cost and labor that would have been required to route high count fibers to a separate location.

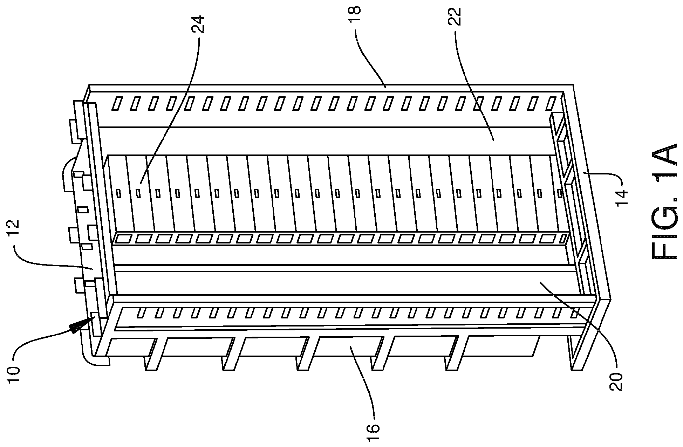

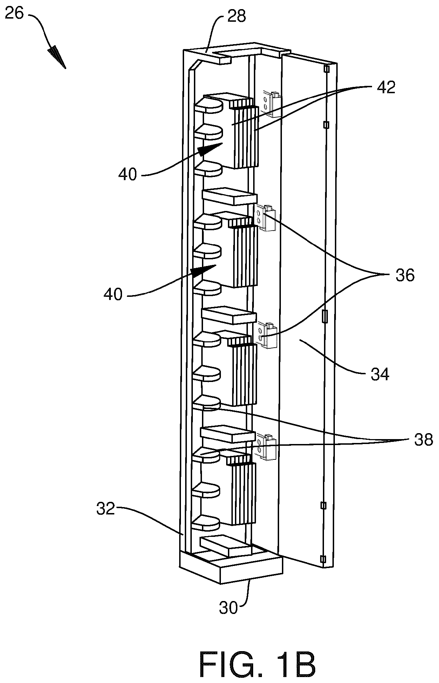

Figures 1A and 1B illustrate an example fiber management storage system. The system may include an ODF cabinet 10. The ODF cabinet 10 is configured to receive a patch panel 24, as shown, and at least one splice cabinet 26.

As shown in Figure 1A, the ODF cabinet 10 has a first surface 12, a second surface 14 opposite and substantially parallel to the first surface 12, and third and fourth surfaces 16, 18 coupled to and extending between the first and second surfaces 12, 14. The first, second, third, and fourth surfaces 12, 14, 16, 18 may form a substantially rectangular perimeter of the ODF cabinet 10. The patch panel 24 is configured to be inserted into the ODF cabinet 10, as shown. For example, the patch panel 24 may extend between two surfaces of the ODF cabinet, *e.g.*, first surface 12 and second surface 14. The patch panel 24 may be positioned between third and fourth surfaces 16, 18. For example, there may be a gap or space between the third surface 16 of the ODF cabinet 10 and a longitudinal surface of the patch panel 24. There may, additionally or alternatively, be a gap or space between the fourth surface 18 of the ODF cabinet 10 and another longitudinal surface of the patch panel 24. The gaps between the third and fourth surfaces 16, 18 of the ODF cabinet 10 and the respective longitudinal surfaces of the patch panel 24 may be substantially the same. In some examples, the gaps may be different such that the patch panel 24 is offset to one surface as compared to the other. One or more of the gaps may be configured to receive a splice cabinet 26. For example, the splice cabinet 26 may be on either side of the patch panel 24 and adjacent to either the third or fourth surface 16, 18 of the ODF cabinet 10. In other examples, there may be two splice cabinets 26 on either side of the patch panel 24, each adjacent to either the third or fourth surface 16, 18 of the ODF cabinet 10.

The splice cabinet 26, as shown in Figure 1B, has a first surface 28, a second surface 30 opposite and substantially parallel to the first surface 28, and third surface 32 coupled to and extending between the first and second surfaces 28, 30.

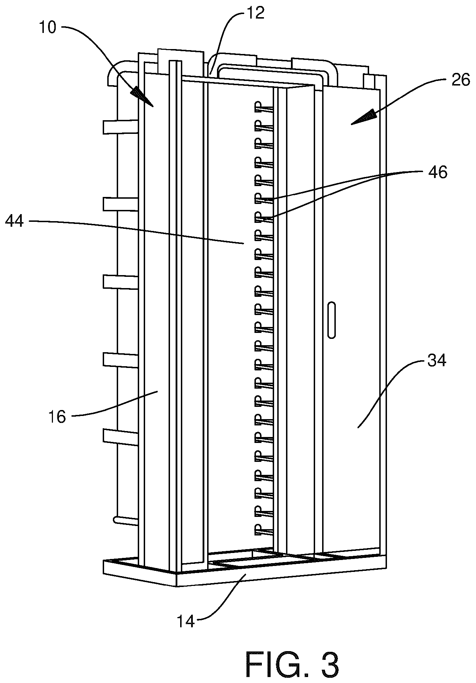

The splice cabinet 26 may include a unit door 34. The unit door 34 may be rotationally connected to the first and second surfaces 28, 30 of the splice cabinet 26. The third surface 32 may include unit door brackets 36 to connect the unit door 34 to the third surface 32. There may be four unit door brackets 36. Accordingly, the unit door 34 in an open position is substantially perpendicular to the third surface 32. The unit door 34, when in a closed position, is substantially parallel to the third surface 32, as shown in Figure 3.

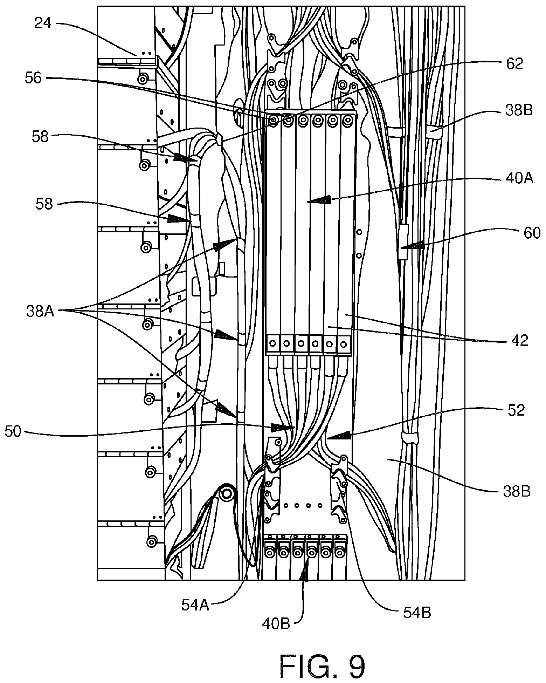

The splice cabinet 26 may include a series of cable hoops 38A, 38B connected to third surface 32 and configured to support cables 50, 52 between the splice cassettes 42 and the patch panel 24, as described in further detail in connection to Figure 9.

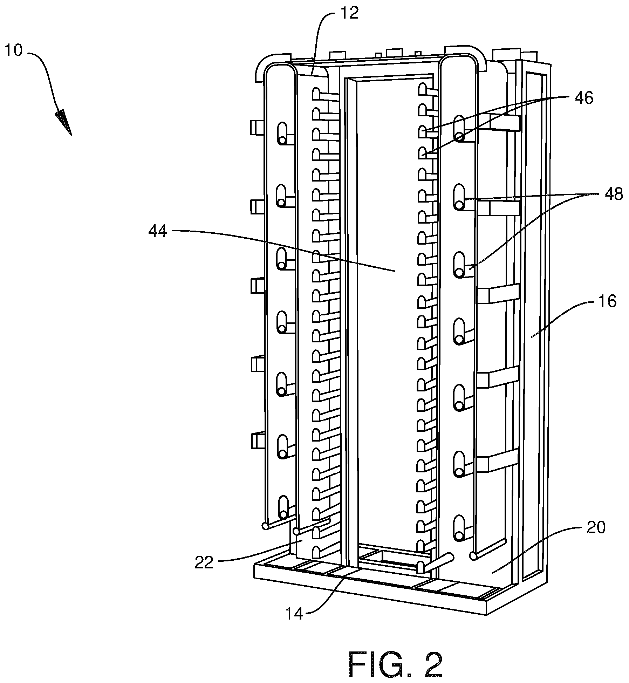

Figure 2 is another perspective view of the ODF cabinet 10 of Figure 1. The ODF cabinet 10 may include a cavity 44 within the perimeter of the first, second, third, and fourth surfaces 12, 14, 16, and 18. The cavity 44 may be shaped substantially similar to a rectangular prism. The cavity 44 defines surfaces that are substantially parallel to the first, second, third, and fourth surfaces 12, 14, 16, and 18 of the ODF cabinet 10. The cavity 44 may be configured to receive the patch panel 24. Accordingly, the dimensions of the cavity 44 may be sized to accommodate the patch panel 24. For example, the cavity 44 may have a perimeter that is slightly bigger than the perimeter of the patch panel 24 such that the patch panel 24 can be inserted into the cavity 44.

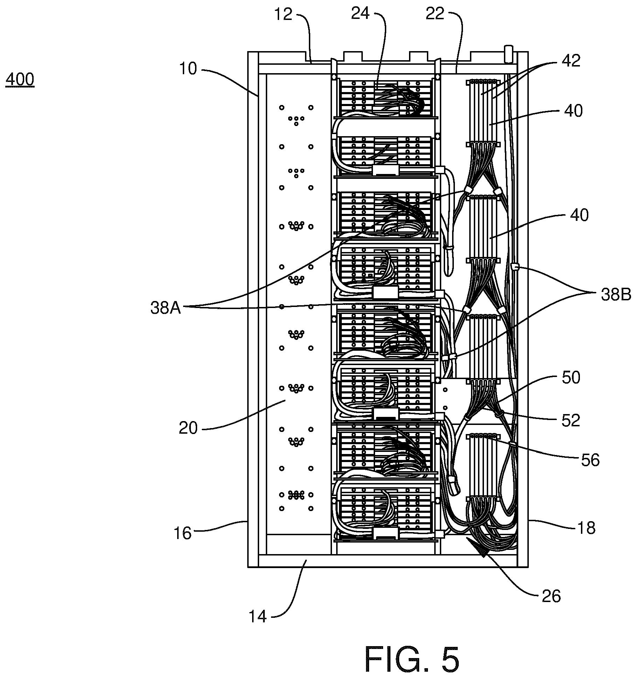

The ODF cabinet 10 may have fifth and sixth surfaces 20, 22 transverse to the third and fourth surfaces 16, 18 and substantially parallel to the first and second surfaces 12, 14. According to some examples, the fifth and sixth surfaces 20, 22 are substantially perpendicular to the third and fourth surfaces 16, 18. The third and fifth surfaces 16, 20 of the ODF cabinet 10 may be configured to support the splice cabinet 26, and the fourth and sixth surfaces 18, 22 of the ODF cabinet 10 may be configured to support a second splice cabinet 26, as described in further detail in connection to Figure 5. According to some examples, the fifth and sixth surfaces 20, 22 of the ODF cabinet 10 may have a substantially similar length as the third surface 32 of the splice cabinet 26.

Figure 3 illustrates an example splice cabinet inserted into the ODF cabinet. The first and second surfaces 28, 30 of the splice cabinet 26 may be substantially parallel to the first and second surfaces 12, 14 of the ODF cabinet 10, respectively. Additionally, the third surface 32 of the splice cabinet 26 may be substantially parallel to the fifth and sixth surfaces 20, 22 of the ODF cabinet 10. When inserted, the third surface 32 of the splice cabinet 26 may be adjacent to the sixth surface 22 of the ODF cabinet 10, and the first and second surfaces 28, 30 of the splice cabinet 26 may be perpendicular and adjacent to the second surface 14 of the ODF cabinet 10. In other examples, the third surface 32 of the splice cabinet 26 may be adjacent to the fifth surface 20 of the ODF cabinet 10, and the first and second surfaces 28, 30 of the splice cabinet 26 may be perpendicular and adjacent to the first surface 12 of the ODF cabinet 10.

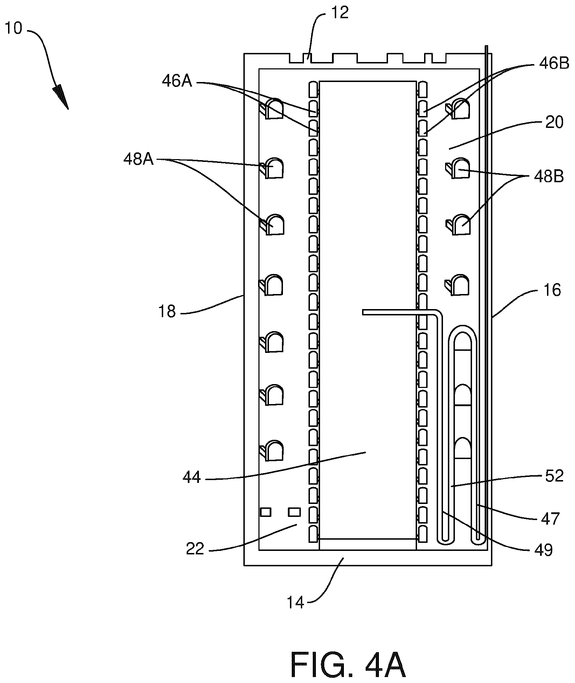

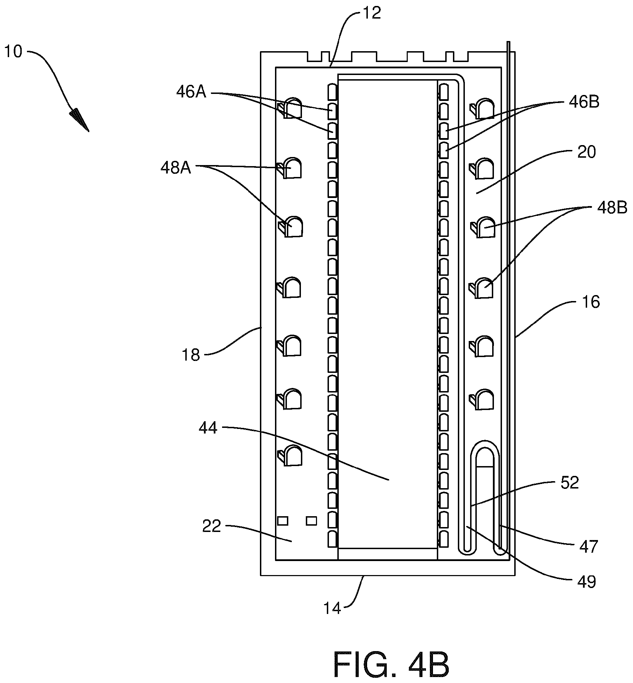

Figures 4A and 4B illustrate a front perspective of the ODF cabinet of Figure 1A. The ODF cabinet 10 may include a first set of interior hooks 46A connected to and extending perpendicular from the sixth surface 22. A second set of interior hooks 46B may be connected to and extending perpendicular from the fifth surface 20. The hooks within the first and second sets of interior hooks 46A, 46B may be vertically aligned. In some examples, the first and second sets of interior hooks 46A, 46B are aligned such that they are substantially parallel to each other and/or substantially parallel to third and fourth surfaces 16, 18.

The ODF cabinet 10 may also include a first set of exterior hooks 48A connected to and extending perpendicular from the sixth surface 22. A second set of exterior hooks 48B may be connected to and extending perpendicular from the fifth surface 20. The hooks within the first and second sets of exterior hooks 48A, 48B may be vertically aligned. In some examples, the first and second sets of exterior hooks 48A, 48B are aligned such that they are substantially parallel to each other and/or substantially parallel to third and fourth surfaces 16, 18. The first set of exterior hooks 48A may be positioned between the first set of exterior hooks 46A and the fourth surface 18, and the second set of exterior hooks 48B may be positioned between the second set of interior hooks 46B and the third surface 16.

The interior and exterior hooks 46A, 46B, 48A, 48B may be used to route cables 52 to ports on a patch panel. The cables 52 may be routed from an entry point on first surface 12 towards second surface 14 of the ODF cabinet 10. The cables 52 may then curve around a first protrusion 47 to be rerouted towards the first surface 12 of the ODF cabinet 10. The cables 52 may then curve around one of the exterior hooks 48A, 48B to be rerouted towards the second surface 14 of the ODF cabinet 10. The cables 52 may then curve around a second protrusion 49 to be rerouted towards the first surface 12 of the ODF cabinet 10. Once the cables 52 reach a height substantially parallel to a height of a corresponding port in a patch panel, the cables 52 may then be routed around one of the interior hooks 46A, 46B to be routed into the corresponding port.

As shown in Figure 4A, the cables 52 may be curved around an exterior hook 48A, 48B positioned near the middle of the vertical line if the corresponding port is near the middle of a patch panel. As shown in Figure 4B, the cables 52 may be curved around an exterior hook 48A, 48B positioned near the second surface 14 of the ODF cabinet 10 if the corresponding port is near the first surface 12 of the ODF cabinet 10. Additionally, the cables 52 may be curved around an exterior hook 48A, 48B positioned near the first surface 12 of the ODF cabinet 10 if the corresponding port is near the second surface 14 the ODF cabinet 10. According to some examples, the exterior hook 48B chosen for routing the cables may be determined based on the location of splice cassette within the ODF cabinet that the cable is being routed to. However, the cables 52 may be curved around any exterior hook 48B that sufficiently manages the slack of the cables. While Figures 4A and 4B illustrate the cable 52 being routed around exterior hook 48B and interior hook 46B, another cable (not shown) may be routed around exterior hooks 48A and interior hooks 46B.

Figure 5 illustrates an example fiber management storage system 400. The fiber management storage system 400 includes splice cabinet 26, patch panel 24, and splice cassettes 42 within splice units 40. According to some examples, one or more cables 50, 52 may be connected to the patch panel 24 and/or splice cassettes 42.

The splice cabinet 26 may be configured to receive an inbound cable comprising 6,912 cables. The splice cabinet 26 may be configured to house twenty-four (24) splice cassettes 42. Each splice cassette 42 may be configured to receive 288 cables. However, the number of cables may increase or decrease based on the number of splice cassettes 42 within the splice cabinet 26.

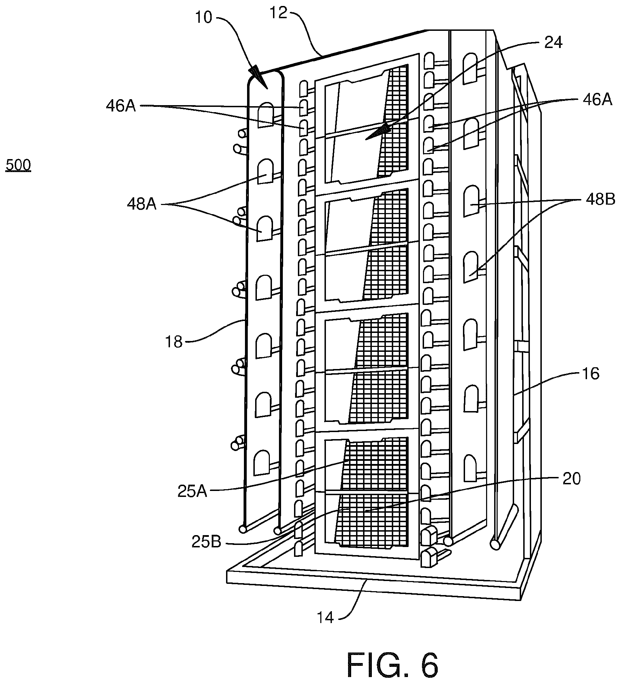

Figure 6 illustrates an example fiber management storage system 500. The fiber management storage system 500 includes patch panels 24. As shown, the ODF cabinet includes four (4) patch panels 24. The patch panel 24 includes a plurality of ports. Each port may be configured to receive two cables, *e.g*., cables 50, 52.

Each patch panel 24 may be protected with one or more doors, *e.g.*, doors 25A, 25B. For example, a first door 25A may cover a first portion of a given patch panel 24 and a second door 25B may cover a second portion of the patch panel 24. Each door 25A, 25B, when opened, allows for continued access to the other door. For example, as door 25A is being opened and/or is opened, door 25B continues to be accessible such that door 25B can be opened. Further, when door 25A is being opened and/or is opened, another door for the patch panel above door 25A remains accessible such that the other door can be opened. The fiber management storage system 500 may also include splice cassettes 42 connected to the third surface 32 of the splice cabinet 26, inserted into the back of the ODF cabinet, as shown in Figure 5.

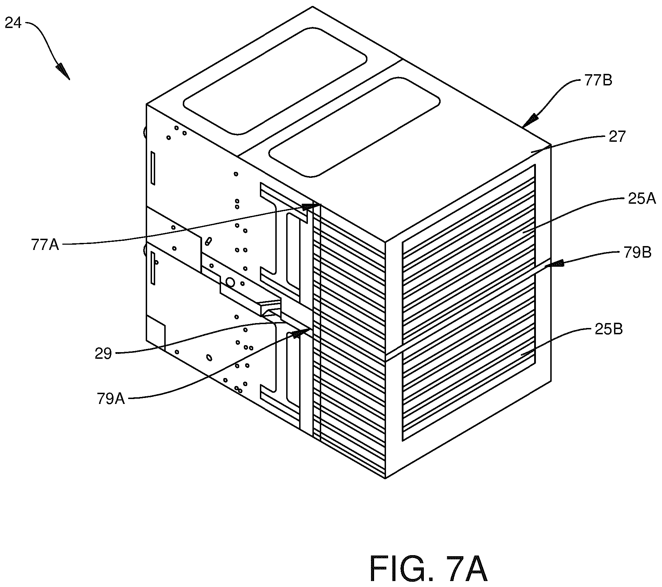

Figures 7A-7D illustrate an example section of the patch panel 24. The patch panel 24 has a first hinge location 27 for the first door 25A and a second hinge location 29 for the second door 25B. The hinge locations 27, 29 may be configured to allow the doors to pivotably rotate until the door is substantially parallel with the first and/or second surface 12, 14 of the ODF cabinet 10. One or more tracks may be positioned along a plane defined by the hinge location. For example, the hinge locations 27, 29 may define a plane. At each edge 77A, 77B, 79A, 79B of the plane a track may be positioned for receiving the door 25A, 25B. The edge 77A, 77B, 79A, 79B of the plane may be defined by an edge of the door 25A, 25B and/or a surface of the patch panel 24. While a track on each edge 77A, 77B, 79A, 79B, the patch panel 24 may include a track on one or both opposing edges.

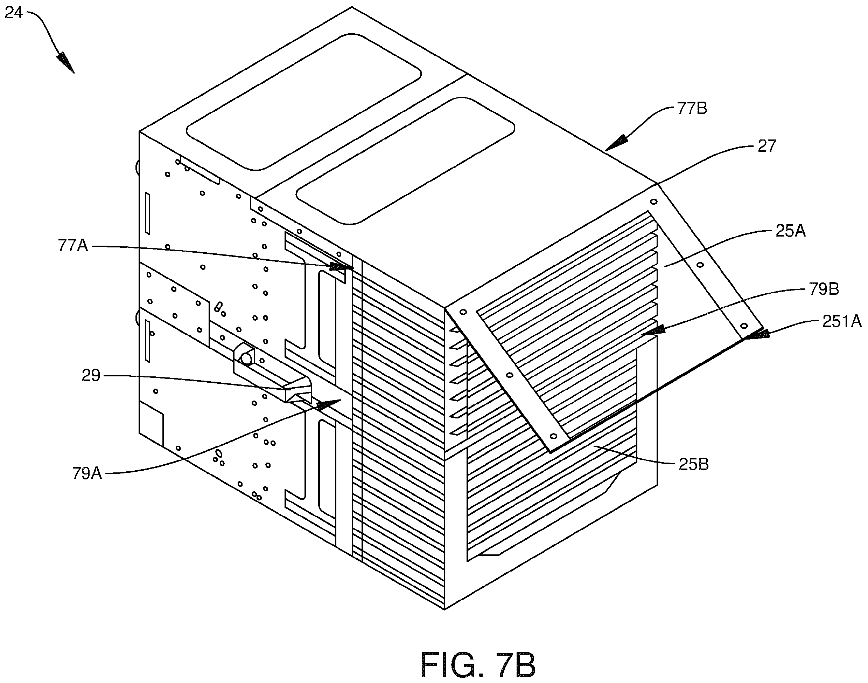

As shown in Figure 7A, the doors 25A, 25B are in a closed position. In Figure 7B, the door 25A is shown in a partially open position. For example, a bottom edge 251A may swing in an outward direction, *e.g.,* away from the patch panel 24, and upward, *e.g.,* toward first surface 12 of the ODF cabinet 10, direction. The door 25A may rotate around hinge location 27 via a hinging mechanism.

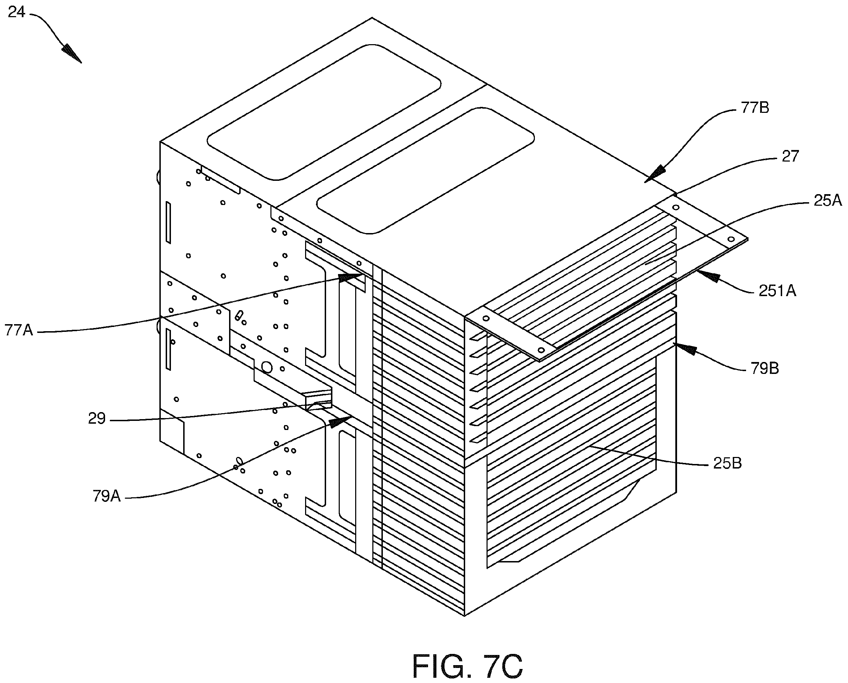

Figure 7C, illustrates an example in which the door 25 is in a partially open position. For example, after the door 25A pivots via the hinging mechanism, the door 25A may be configured to slide on a track and into the patch panel 24.

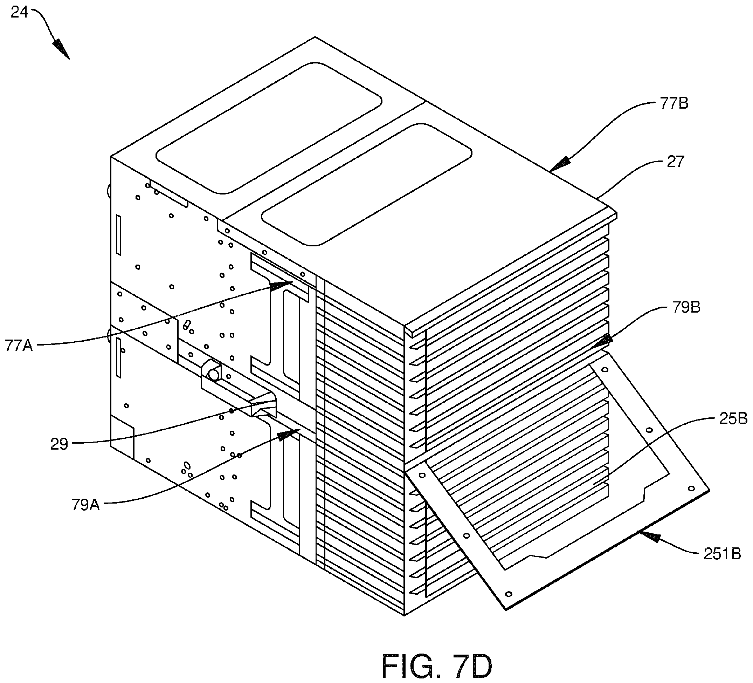

Figure 7D illustrates an example in which the door 25A is in an open position and door 25B is being opened. For example, a bottom edge 251B may swing in an outward direction, *e.g.,* away from the patch panel 24, and upward, *e.g.,* toward first surface 12 of the ODF cabinet 10, direction. Additionally, when open, the door 25A may be substantially parallel to first and second surfaces 12, 14 of the ODF cabinet 10. The tracks may be configured to receive the door 25A such that, when inserted, the door 25A is received within the patch panel 24. By having the door 25A be inserted into the patch panel 24, when in an open position, the door 25A does not interfere with the opening of another door, *e.g.,* door 25, of the patch panel(s) 24. This location of the hinging mechanism along with the hinging mechanism and track allows for each door 25A, 25B to be in an open and/or partially open position simultaneously, thereby allowing for access to each port in the patch panel 24 simultaneously.

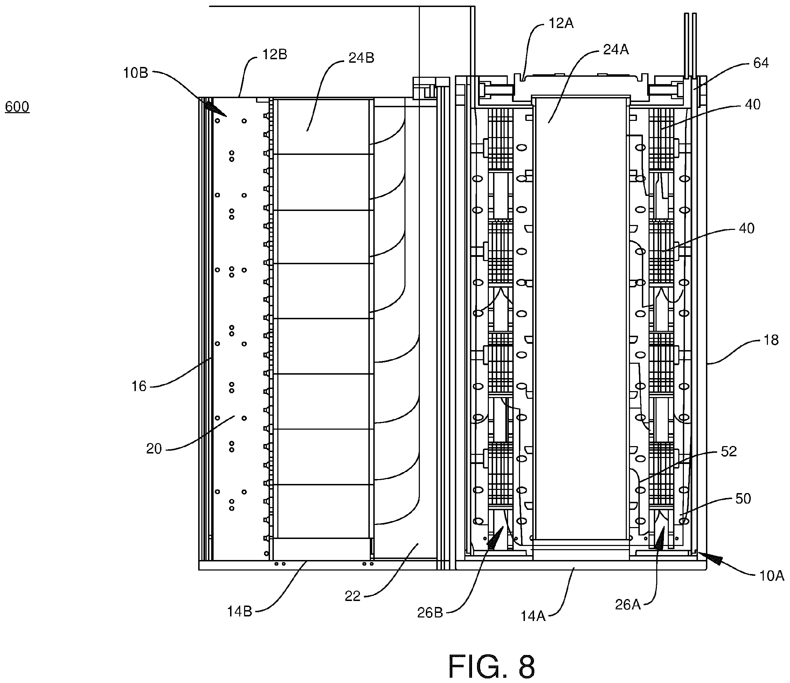

Figure 8 illustrates another example fiber management storage system 600 in which the ODF cabinet includes two splice cabinets. For example, the fiber management storage system 600 may include two racks. The number of racks may be determined based on network deployment requirements. The first rack may include ODF cabinet 10A and the second rack may include ODF cabinet 10B. ODF cabinet 10A may include a first and second splice cabinet 26A, 26B. The second splice cabinet 26B may be configured to splice the cables entering ODF cabinet 10A to cables within ODF cabinet 10A as well as those in adjacent ODF cabinet 10B. For example, the second ODF cabinet 10B may include a second patch panel 24B. The second patch panel 24B is configured to receive the fibers from the splice cabinet 24A and/or 24B within the first ODF cabinet 10A.

According to some examples, each splice cabinet 26 may be able to accommodate up to 6,912 fibers, or cables, as each splice cabinet 26 may house twenty-four (24) splice cassettes 42 that are each configured to receive 288 fibers. By having a second splice cabinet within a single ODF cabinet, the ODF cabinet, *e.g.,* cabinet 10A, can accommodate twice as many fibers, *e.g.,* 13,824 fibers, as compared to the amount an ODF cabinet with a single splice cabinet 26 can accommodate.

Inbound cables 52 may be routed from outside the ODF cabinet 10A to splice units 40 in splice cabinets 26A, 26B and then to the patch panels 24A, 24B. Outbound cables 50 may be routed from the splice units 40 in splice cabinets 26A, 26B to outside the ODF cabinet 10A. Specifically, cables 50, 52 are routed from splice cassettes 42 removably inserted into splice units 40, as described in detail in connection with Figure 9. The outbound cables 50 from splice cabinet 26B routed outside of the ODF cabinet 10A may be routed to patch panel 24B within the second ODF cabinet 10B. The second ODF cabinet 10B may have the same structure as the ODF cabinet 10 described in connection with Figure 2. The second patch panel 24B may have the same position within the second ODF cabinet 10B as described in connection with Figures 5 and 6.

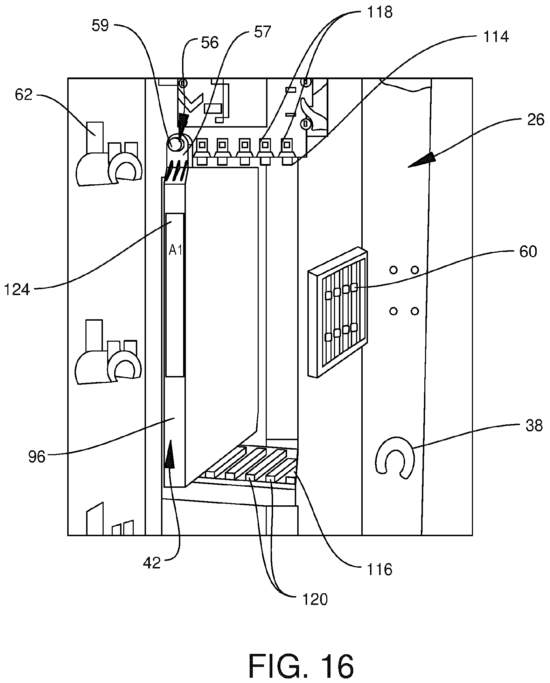

Figure 9 illustrates example splice units. For example, the fiber management system, *e.g*., fiber management system 400, 500, may include a first splice unit 40A and a second splice unit 40B. Each splice unit 40A, 40B may include a plurality of splice cassettes 42. As shown, the splice units 40A, 40B include six splice cassettes 42. However, the splice units 40A, 40B may include more splice cassettes, *e.g.,* 8, 10, 11, 12, etc., or less splice cassettes, *e.g.,* 5, 3, 2, etc. Accordingly, the six splice cassettes 42 shown is just one example and is not intended to be limiting. According to some examples, the splice units 40A, 40B may be in a vertical line, and the splice cassettes 42 may be in a horizontal line, such as the example shown in Figure 9. Such orientations of the splice units 40A, 40B and splice cassettes 42 maximize space within the splice cabinet 26 and allow for easy removal of splice cassettes 42 for splicing. However, the splice units 40A, 40B and splice cassettes 42 may be oriented in any direction. The splice cassettes 42 may include a knob 56 configured to lock the splice cassette 42 into the splice cabinet 26, as described in detail in connection with Figure 16.

One or more cables may be routed towards or away from the fiber management system. For example, cables routed from outside an ODF cabinet to inside that ODF cabinet may be inbound cables. The inbound cables may also be routed between two or more points within the fiber management system, including, but are not limited to, a point on a patch panel and a point on a splice cassette, each located within the fiber management system. In contrast, cables routed between a point within the fiber management system to a point outside of the fiber management system may be outbound cables. A point within the fiber management system includes, but is not limited to, a point on a splice cassette. A point outside the fiber management system includes, but is not limited to, a patch panel in a second fiber management system or to a point outside of the data center. For example, as shown in Figure 9, cables 52 may be inbound cables while cables 50 may be outbound cables.

The cables 52 from the splice cassettes 42 may be routed to one side of the ODF cabinet 10. Specifically, the cables 52 may be routed to the side of the ODF cabinet 10 closest to the patch panel 24. The cables 52 may be secured below the splice cassette 42 by a cable support 54A through a clamping mechanism.

For purposes of describing the configuration of the technology, and without intending to be limiting, a downwards direction is intended to refer to a direction towards the second surface 30 of the splice cabinet 26, and an upwards direction is intended to refer to a direction towards the first surface 28 of the splice cabinet 26.

From the cable support 54A, the cables 52 may then be routed downward towards the second surface 30 of the splice cabinet 26. According to some examples, cables 52 may be inbound cables, such as cables routed between internal components within a fiber management system, including, but not limited to, patch panel 24 and splice cassettes 42. The cables 52 may extend downwards until being rerouted upwards towards the first surface 28 of the splice cabinet. For example, the cables 52 may extend a certain distance downwards before being curved, *e.g.*, rerouted, upwards. A series of cable hoops 38A may secure the cables 52 in the upward direction. The cable hoops 38A may be formed by two curved protrusions. The cable hoops 38A may extend from the second surface 30 to the first surface 28 of the splice cabinet 26. The curved protrusions may be curved towards each other such that the free ends, *e.g.,* the ends of the curved protrusion not connected to the third surface 32 of the splice cabinet 26 substantially meet. According to some examples, the curved protrusions forming the cable hoop 38A may form a substantially circular or oblong shape configured to hold the cables 52. There may be a gap between the free ends of the curved protrusions such that the cables 52 can be inserted and removed from the cable hoop 38A.

The cables 52 extend in the upward direction for a predetermined distance before being curved, *e.g*., rerouted, downwards. For example, the cables 52 may extend upwards until reaching a top radius guide 62. The top radius guide 62 supports the cables 52 as the cables 52 are rerouted downwards. The top radius guide 62 may be a curved surface. The apex of the curve may be oriented towards the first surface 28 of the splice cabinet 26. For example, the top radius guide 62 may have a substantially semicircular shape such that the apex of the curved surface is towards the first surface 28 and the flat portion of the semicircular shape is oriented towards the second surface 30 of the splice cabinet 26.

Cables 52 may be curved around the top radius guide 62 from an end of the top radius guide 62 closest to third surface 32 to a second end farthest away from third surface 32. The cables 52 may then be routed downward into corresponding ports in the patch panel 24. Thus, the cables 52 in a downward direction into the patch panel 24 are easily accessible from the unit door 34 due to their distance from third surface 32. A series of cable strips 58 may secure the bundle of cables 52 at each point in which one of the cables is routed away from the bundle into the patch panel 24. The cable strips 58 may be a hook-and-loop fastener that can be wrapped around the bundle of cables 52. According to some examples, either one of or both the cable strips 58 and cable hoops 38B, similar to cable hoops 38A, may be used to secure the bundle of cables 52. Additionally, or alternatively, any securing means may be used to secure the bundle of cable, such as string, zip-ties, etc.

The cables 50 from each splice cassette 42 may be routed to the opposite side from which the cables 52 were routed. The cables 50 may be, for example, outbound cables. Outbound cables may be cables that are routed from the ODF cabinet 10 and/or splice cabinet 26 to another endpoint. The cables 50 may be secured below the splice cassette 42 by a cable support 54B through a clamping mechanism. The cable support 54B may be substantially similar to the cable support 54A.

The cables 50 may be routed downward, *e.g.*, towards the second surface 30 of the splice cabinet 26. The cables 50 may extend downwards until being rerouted upwards towards the first surface 28 of the splice cabinet 26. Cable hoops 38B may secure the cables 50 routed in an upward direction. The cables 50 may, in some examples, be secured by a tie down bracket 60. The tie down bracket 60 may be a protrusion connected to the third surface 32 of the splice cabinet 26 and transverse to the first and second surfaces 28, 30 of the splice cabinet 26. The tie down bracket 60 may include a curved free end. The free end may be the end of the protrusion not coupled and/or connected to the third surface 32 of the splice cabinet 26. The tie down bracket 60 may be configured to secure the cables 50 against the fourth surface 18 of the ODF cabinet 10. The cables 50 routed in the upward direction may then be routed out of the ODF cabinet 10.

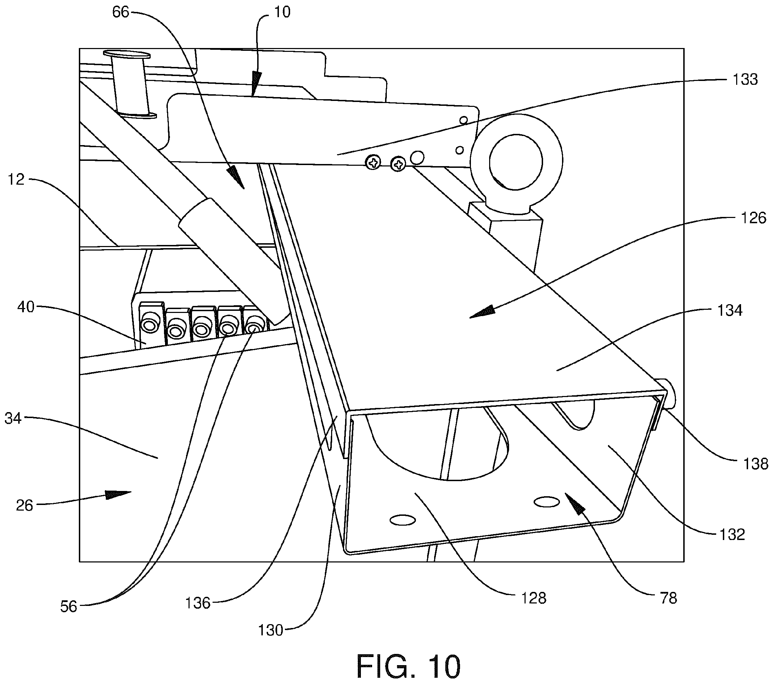

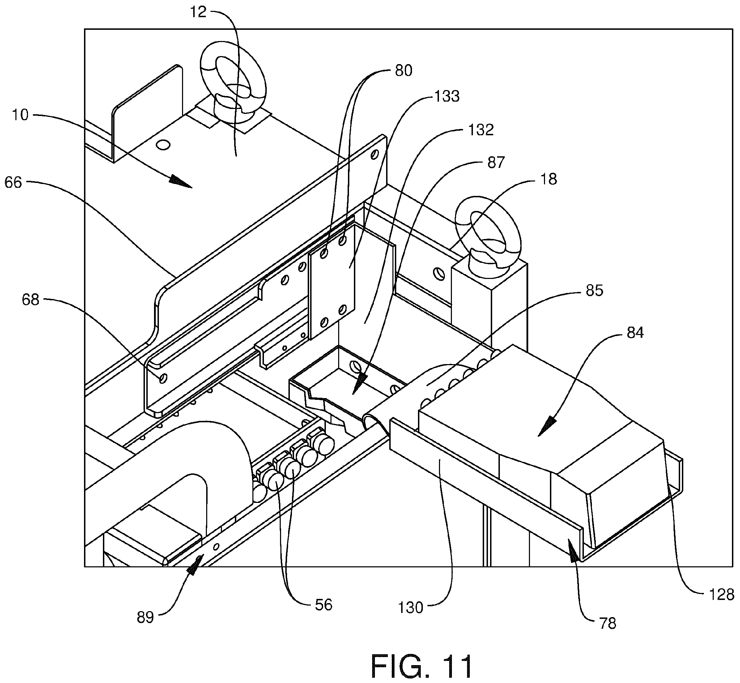

Figures 10 and 11 illustrate an example fiber management system in which the cables 50 are routed into the ODF cabinet 10. The cables 52 may be routed into the ODF cabinet 10 using a bracket system 64. The bracket system 64 may provide a smooth bend for the cables 52. A smooth bend may be determined based on the radius of the cable. For example, a smooth bend may be a bend radius corresponding to 15 times the radius of the cable. According to some examples, a smooth bend may correspond to a bend radius being 15 to 20 times the radius of the cable. For example, if the radius of a cable is 1 inch, the bend radius for a smooth bend might be within a range of 15 to 20 inches. Determining whether a bend is a smooth bend based on the radius of the cable is just one example and is not intended to be limiting. Moreover, a smooth bend being a bend radius that is 15 to 20 times the radius of the cable is just one example. The bend radius may be greater than 15 to 20 times the radius of the cable or smaller than 15 to 20 times the radius of the cable and may be considered a smooth bend. According to some examples, a smooth bend may be a bend radius that is greater than 90 degrees, *e.g*., greater than 90 degrees and less than 270 degrees.

Having a smooth bend improves the integrity of the data transmitted from the cables as compared to a sharper bend. For example, when cables include sharp bends, the optical signal being transmitted through the cable is refracted and is more likely to be lost as compared to when cables include smooth bends. The loss may be due to the refracted light escaping through the external material of the cables.

The bracket system 64 includes a base 66. The base 66 is configured to be connected to the first surface 12 of the ODF cabinet 10. For example, the base 66 may be coupled to the first surface 12 via one or more screws, rivets, glue, welds, or other connections means. In some examples, the base 66 includes holes 68 for securing the base 66 to the ODF cabinet 10 with a fastener, such as a screw. At least some of the holes 68 on the base 66 may align with holes in the ODF cabinet 10. There may be two holes 68 in a vertical line on an end of the base 66 farthest from the fourth surface 18 of the ODF cabinet 10. There may be eight additional holes 68 in four vertical lines and row horizontal lines from an end of the base 66 closest to the ODF cabinet 10 towards the middle of the base 66.

The base 66 may extend along the edge of the first surface 12 of the ODF cabinet 10. For example, the base 66 may extend along at least a portion of the first surface 12 between the third surface 16 and the fourth surface 18 of the ODF cabinet 10. The base 66 may have a substantially rectangular shape. However, the base 66 can have any shape, such as oblong, trapezoidal, etc.

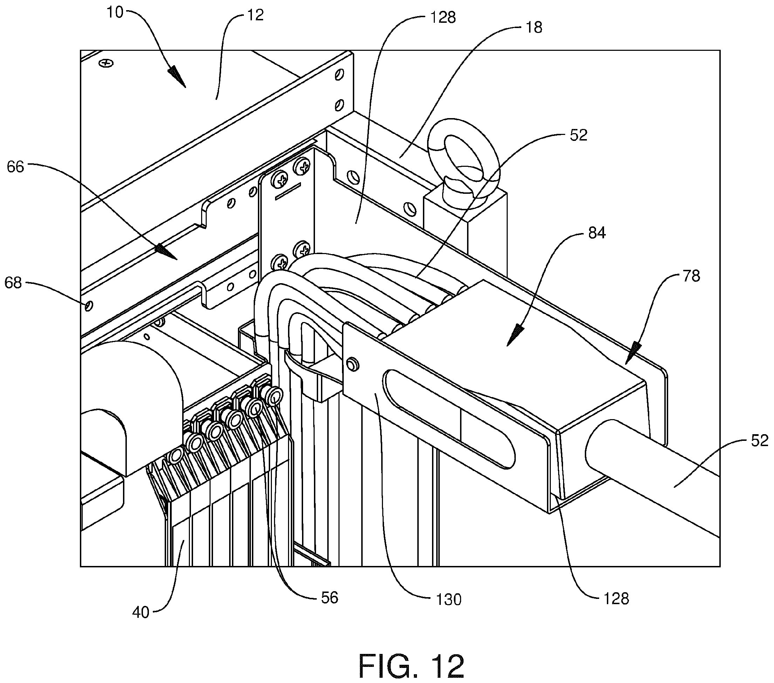

The bracket system 64 may additionally include a support extension 78. The support extension 78 may be connected to and extend transverse to base 66. The support extension 78 may include a first surface 128, second surface 130, third surface 132, and fourth surface 133. The first surface 128 is transverse to the second and third surfaces 130, 132. In some examples, the second and third surfaces 130, 132 are substantially parallel to each other and/or to the third and fourth surfaces 16, 18 of the ODF cabinet 10. The first surface 128 of the support extension 78 may include a flat portion, a curved portion 85, and a cable control portion 87. The curved portion 85 may be configured to curve around a top 89 of the unit door 34 of the splice cabinet 26. When the bracket system 64 is assembled, the curved portion 85 may be positioned above a highest point of the unit door 34 such that the unit door 34 can be moved, *e.g.*, opened or closed, without removing bracket system 64. The cable control portion 87 may be configured to contain the bundle of inbound cables 52, as described in detail in connection with Figure 12.

The fourth surface 133 is transverse to the third surface 132. The fourth surface 133 may be configured to be coupled to the base 66. For example, the fourth surface 133 may include holes 80 that align with the holes 68 in the base 66 and/or ODF cabinet 10. When coupling the support extension 78 to the ODF cabinet 10, the holes 80 may align with the holes 68 of the base 66 and/or holes in the ODF cabinet 10. Fasteners, such as screws, may be inserted into the holes 80, holes 68, and/or corresponding holes in the ODF cabinet 10.

The support extension 78 is configured to support one or more components. For example, the components may include cables, a fiber jack, cable comb, etc. In some examples, the support extension 78 may be configured to support a breakout kit 84. The breakout kit 84 may be positioned on first surface 128 and between second and third surfaces 130 and 132 of the support extension 78.

Figure 12 depicts the bracket system 64 connected to the ODF cabinet 10. Fasteners may connect the support extension 78 to the base 66 and then to the ODF cabinet 10, as described in detail in connection to Figures 10-11. The inbound cables 52 may be inserted into breakout kit 84 on an end farthest from the third surface 32 of the splice cabinet 26. The breakout kit 84 may be configured to break out the inbound cable 52 into sub-groupings of fibers. For example, the input cable 52 may include a plurality of fibers bundled into a sleeve. As an example, the inbound cables 52 inserted into breakout kit 84 may include 6,912 fibers. The breakout kit 84 may group the fibers into a plurality of sub-groupings. Each sub-grouping of fibers may be within its own jacket, or sleeve. In examples where the cable 52 includes 6,912 fibers, each sub-grouping of fibers may include 288 fibers. The sub-groupings of fibers may be routed from the breakout kit 84, at an end closest to the third surface 32 of the splice cabinet 26, through cable control portion 87 and to splice cassettes 42 within the splice cabinet 26 or directly to the patch panel 24.

Previously, the breakout kit was positioned vertically, such that the cable would enter from the direction of the first surface 12 of the ODF cabinet 10 and extend toward the second surface 14 of the ODF cabinet 10. In contrast, the support extension 78 allows for the breakout kit 84 to be positioned horizontally, *e.g.*, with the cable 52 entering from the direction of the first surface 12 of the ODF cabinet 10 towards the second surface 14 of the ODF cabinet 10. This allows for the ODF cabinet to be positioned under a tray, whereas the previous vertical orientation prevented other components of the data center from being positioned above the ODF cabinet. Further, when positioned under a tray, the horizontal orientation of the breakout kit 84 reduces the number of bends to one. For example, if the breakout kit 84 was positioned vertically, *e.g*., without the support extension 78, the cable 52 would be positioned in an S shape to be routed around the tray and into the cabinet. In contrast, the horizontal orientation of the breakout kit 84 only requires one bend. Further, the support extension 78 allows for a smoother curve than the curves on the conventional S-shaped position. Very hard bends in cables, *e.g*., fiber optic cables, can cause internal reflection within the fiber optic. Hard bends increase the reflected light, thereby diminishing the received power. Maintaining the bend radius and/or keeping a smooth bend mitigates the potential for internal reflectance of the propagating light. The horizontal position of the support extension 78 and thus the horizontal position of the breakout kit 84 may be configured to maintain the smooth curve and/or bend radius of the cables.

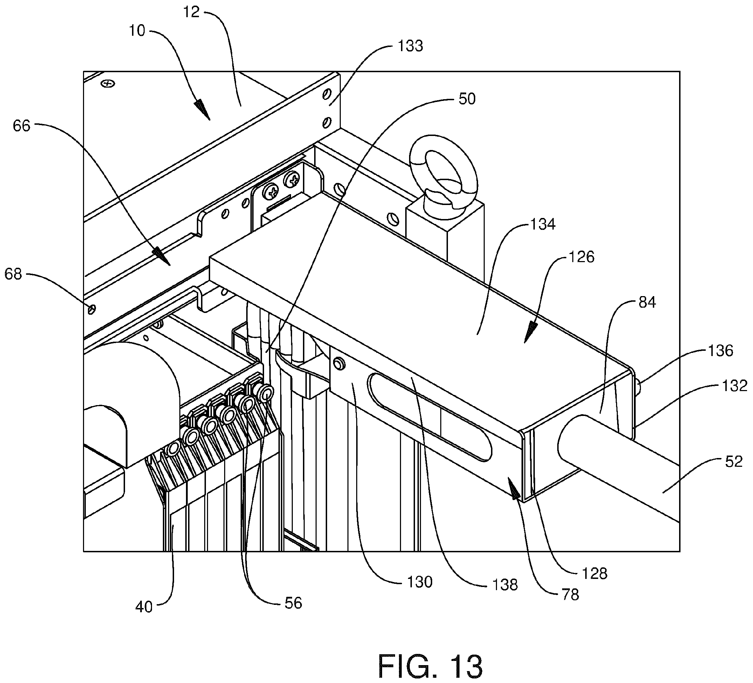

Figure 13 illustrates an example bracket system coupled to an ODF cabinet. The bracket system 64 may include a lid 126 that may be connected to the support extension 78. The lid 126 may protect the components within support extension 78. The lid 126 may include a first, second, and third surface 134, 136, 138. The second and third surfaces 136, 138 are transverse to the first surface 134. The second and third surfaces 136, 138 may be substantially parallel to each other and to the third and fourth surfaces 16, 18 of the ODF cabinet 10. The first, second, and third surfaces 134, 136, 138 of the lid 126 may be substantially parallel to the first, second, and third surfaces 128, 130, 132 of the support extension 78, respectively. The second and third surfaces 136, 138 of the lid 126 may cover a portion of the second and third surfaces 130, 132 of the support extension 78. The lid 126 may include at least one hole on its third surface 138 that aligns with a hole on the third surface 132 of the support extension 78. Once the lid 126 is placed on the support extension 78, a fastener may be inserted into the hole of the lid 126 and support extension 78 such that the lid 126 is secured to the support extension 78.

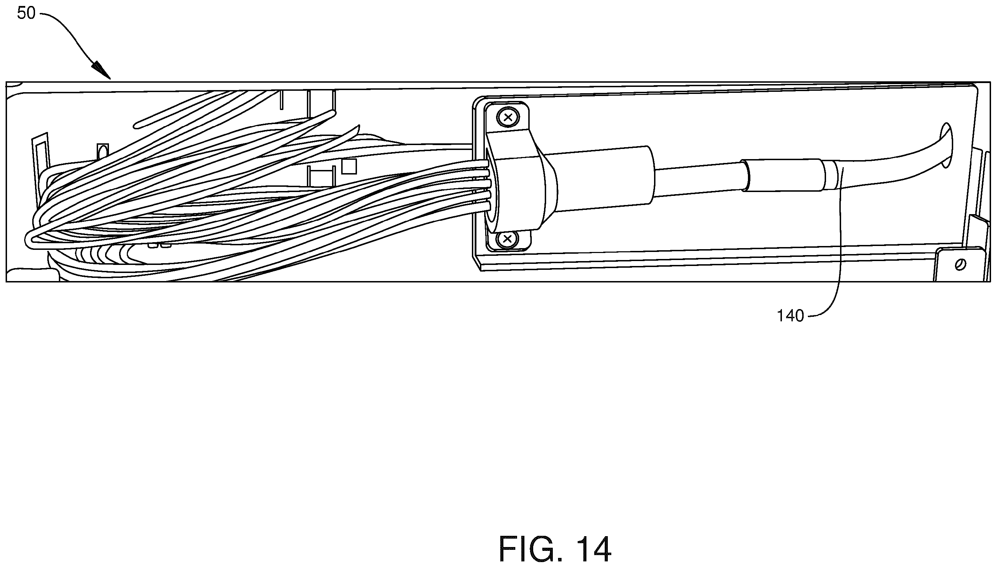

Figure 14 illustrates cables and a fiber jacket. The fiber jacket 140 may be two layers of nylon mesh cloth, which may provide flexibility to the cables while maintaining protection of the cables, therefore allowing the cables to be routed in a narrow space. The fiber jacket 140 may contain a plurality of cables, or fibers. For example, the cable entering the datacenter and being coupled to the ODF cabinet may include a plurality of fibers. In some examples, the cable may include 6,912 fibers. The fibers may be broken into sub-groupings of fibers. For example, the sub-groupings may contain 288 fibers of the 6,912 fibers.

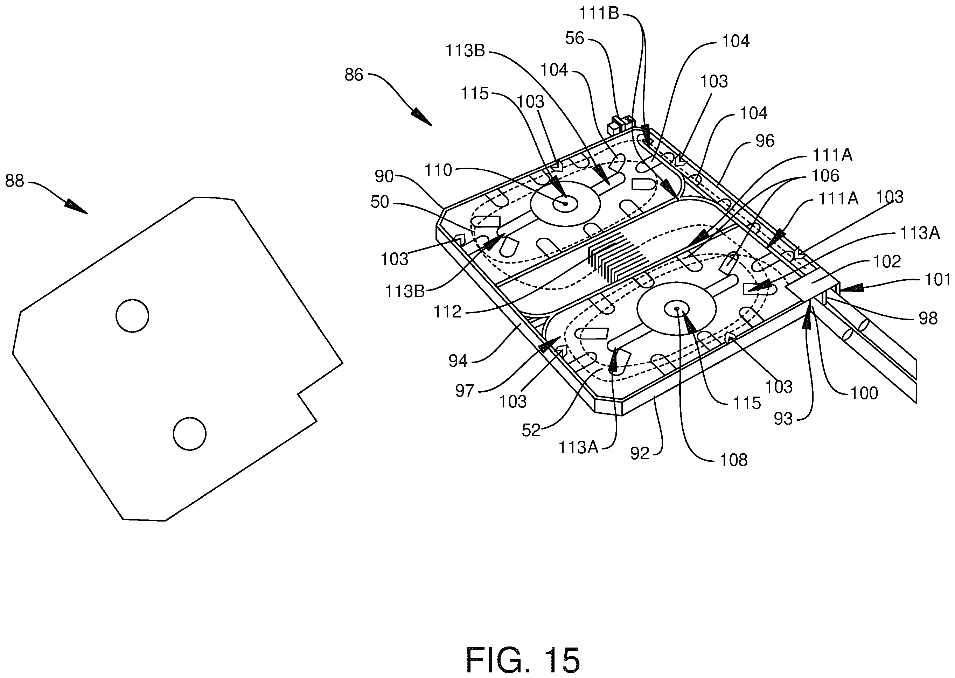

Figure 15 illustrates example components of a splice cassette. For example, the splice cassette 42 may include a tray lid 88 and a tray body 86. The tray body 86 includes a first surface 90, a second surface 92 opposite the first surface 90, a third surface 94 coupled to the first and second surfaces 90, 92, and a fourth surface 96 coupled to the first surface 90. The tray body 86 also includes a base surface 97.

The second surface 92 may include a recess 100 between an end 93 of the second surface 92 and an end of the fourth surface 96. The recess 100 may define cable entry points 98, 100. The cable entry points may be, for example, an outbound cable entry point, *e.g.,* cable entry point 98, and an inbound cable entry point, *e.g.,* cable entry point 100. Cable entry point 98 may be adjacent to the fourth surface 96, and cable entry point 100 may be positioned between the cable entry point 98 and the end 93 of the second surface 92. This adjacent orientation facilitates the vertical orientation of each splice cassette 42. A tube clip 102 may cover the recess 101 and, therefore, cable entry points 98, 100. The tray body 86 may include a first plurality of projections 106. For clarity, only some of the projections 106 are identified with reference numbers in Figure 15. The projections 106 may extend from second surface 92, third surface 94, interior cassette walls 111A, and/or curved walls 113A. The projections 106 may extend toward or away from a first midpoint 108. The first midpoint 108 may be positioned closer to the second edge surface 92 than the first edge surface 90. Some projections 106 may extend towards the first midpoint 108, *e.g.,* the projections 106 extend from second surface 92, third surface 94, and/or interior cassette walls 111A. Some projections 106 may extend away from the first midpoint 108, *e.g.,* the projections 106 extend from curved walls 113A.

Cables, such as cables 52 in Figure 9, may be inserted through the inbound cable entry point 100 and routed around the first midpoint 108 in a direction from the fourth edge surface 96, to the first surface 90, to the third edge surface 94, and to the second edge surface 92. The cables 52 may be secured in this position by the first plurality of projections 106.

The tray body 86 may include a second plurality of projections 104. For clarity, only some of the projections 104 are identified with reference numbers in Figure 15. The projections 104 may extend from first surface 90, third surface 94, fourth surface 96, interior cassette walls 111B, and/or curved walls 113B. The projections 104 may extend toward or away from a second midpoint 110. The second midpoint 110 may be positioned closer to the first edge surface 90 than the second edge surface 92. Some projections 104 may extend towards the second midpoint 110, *e.g.,* the projections 104 extend from first surface 90, third surface 94, fourth surface 96, and/or interior cassette walls 111B. Some projections 104 may extend away from the second midpoint 110, *e.g.,* the projections 104 extend from curved walls 113B. Some projections 104 may be positioned parallel to the fourth surface 96, with some projections 104 extending towards the fourth surface 96, and with some projections 104 extending towards the third surface 94.

The cables 50, 52 may be spliced within the tray body 86. Splicing is a process that joins the ends of two optical fibers to reduce the scattering or reflection of light by providing a splice point and therefore minimizing the loss of light. Cables 50, 52 may be spliced to join two sets of cables together and can be conducted through any known splicing technique known in the art. The spliced cables 50, 52 may be secured by a splice sleeve holder 112 covering the splice point.

The tray lid 88 may have a shape substantially corresponding to the shape of the perimeter of the tray body 86. The tray lid 88 may include a cutout corresponding to the shape of the tube clip 102. For example, when the tray lid 88 is coupled to and/or placed on the tray body 86, the tray lid 88 is sized and shaped to cover the tray body 86 but for the tube clip 102. In some examples, the tray lid 88 may be configured to cover the tube clip 102. Thus, when splice cassette 42 is removed from splice cabinet 26, the tray lid 88 protects cables 50, 52 within the tray body 86 from jamming or tangling. Additionally, the tray lid 88 may be constructed from a translucent material so that the cables 50, 52 are visible without removing tray lid 88.

According to some examples, the tray lid 88 may be coupled to the tray body 86 via one or more connection projections 103. The connection projections 103 may extend from an edge of first surface 90, second surface 92, third surface 94, and/or fourth surface 96. According to some examples, the connection projections 103 may extend transverse from another connection projection 103.

The tray lid 88 may include holes that, when the tray lid 88 is placed on the tray body 86, align with recesses 115 on the tray body 86. The recesses 115 are located on the first and second midpoints 108, 110. The holes on the tray lid 88 and the pair of recesses 115 improve the handling of splice cassettes 42 by providing a location for the user to grip since the tray lid 88 may be made of a slick material. The holes on the tray lid 88 are especially useful when removing and inserting the splice cassettes 42 in the splice cabinet 26 or when detaching or attaching tray lid 88 to the tray body 86.

Figure 16 is an example splice cassette within the splice cabinet. The third surface 32 of the splice cabinet 26 may include a series of top and bottom ledges, such as top and bottom ledges 114, 116, configured to secure splice cassettes 42 within a splice unit 40. Each series of top and bottom ledges 114, 116 may be configured to secure a respective splice unit, such as splice cassette 42 within a splice unit 40. According to some examples, there may be four series of top and bottom ledges 114, 116 secure four or less splice units 40. However, while four series of top and bottom ledges are used, there may be more or less depending on the intended number of splice units.

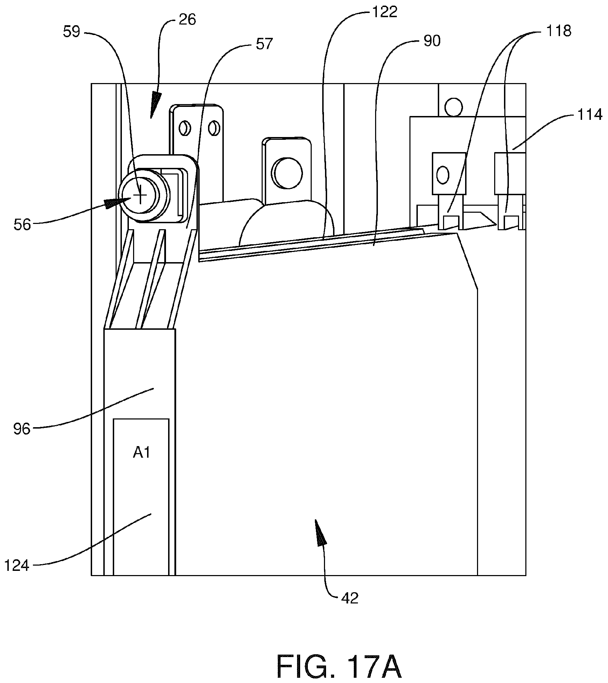

The first surface 90 of the splice cassette 42 may include an extension 122 along at least a portion of the length of the first surface 90 for insertion into a corresponding channel 118 on the top ledge 114 in each of the series of ledges on the splice cabinet 26. The perimeter of the extension 122 may be slightly smaller than the perimeter of the channel 118. For example, the size and shape of the extension 122 may be such that it can be slidably received within the channel 118, as best shown in Figure 17A. In examples in which each splice unit 40 has six splice cassettes 42, each top ledge 114 would include six channels 118 to receive a respective splice cassette 42.

The second surface 92 of the splice cassette 42 may include a recess extending along at least a portion of the length of the second surface 92. The recess may be configured to receive a raised portion 120 on the bottom ledge 116 in each of the series of ledges. The perimeter of the raised portion 120 may be slightly smaller than the perimeter of the recess. For example, the size and shape of the raised portion 120 may be such that the raised portion 120 can be slidably received within recess. In examples in which each splice unit 40 has six splice cassettes 42, each bottom ledge 116 would include six raised portion 120 to secure a respective splice cassette 42. Each set of top and bottom ledges 114, 116 stabilizes the receiving splice cassette 42 by preventing any movement aside from translational movement for the insertion or removal of the cassettes 42.

The splice cassette 42 may include a knob 56 configured to lock the splice cassette 42 into the splice cabinet 26. The knob 56 may be positioned on an extension 57 connected to the first surface 90 of the splice cassette 42. In some examples, the extension 57 is transverse the first surface 90. The knob 56 may include a circular protrusion 59 on a first end of the knob 56. The first end of the knob 56 may be a position and/or surface of the knob 56 farthest from the third surface 32 of splice cabinet 26. The protrusion 59 may include a threaded fastener on a second end of the knob 56. The second end of the knob 56 may be a position and/or surface of the knob 56 closest to the third surface 32 of splice cabinet 26, *e.g*., opposite the first end of the knob 56. The top ledge 114 in each series of ledges in the splice cabinet 26 may have a hole with a threaded interior. To lock the splice cassette 42 into the splice cabinet 26, the knob 56 may be rotated in one direction so as to engage the threaded interior of the hole with the threaded fastener on the knob 56. To unlock and remove the splice cassette 42 from the splice cabinet 26, the knob 56 may be rotated in the opposite direction so as to disengage the knob 56 from the hole in the splice cabinet 26.

When the splice cassette 42 is inserted into the splice cabinet 26, the first and second surfaces 90, 92 of the splice cassette 42 are substantially parallel to the first and second surfaces 28, 30 of the splice cabinet 26. The first surface 90 of the splice cassette 42 may be closer to the first surface 28 of the splice cabinet 26 than the second surface 30 of the splice cabinet 26. The second surface 92 of the splice cassette 42 may be closer to the second surface 30 of the splice cabinet 26 than the first surface 28 of the splice cabinet 26. The third and fourth surfaces 16, 18 of the splice cassette 42 are substantially parallel to the third surface 32 of the splice cabinet 26. The third surface 94 of the splice cassette 42 may be closer to the third surface 32 of the splice cabinet 26 than the fourth surface 96 of the splice cassette 42 is to the third surface 32 of the splice cabinet 26.

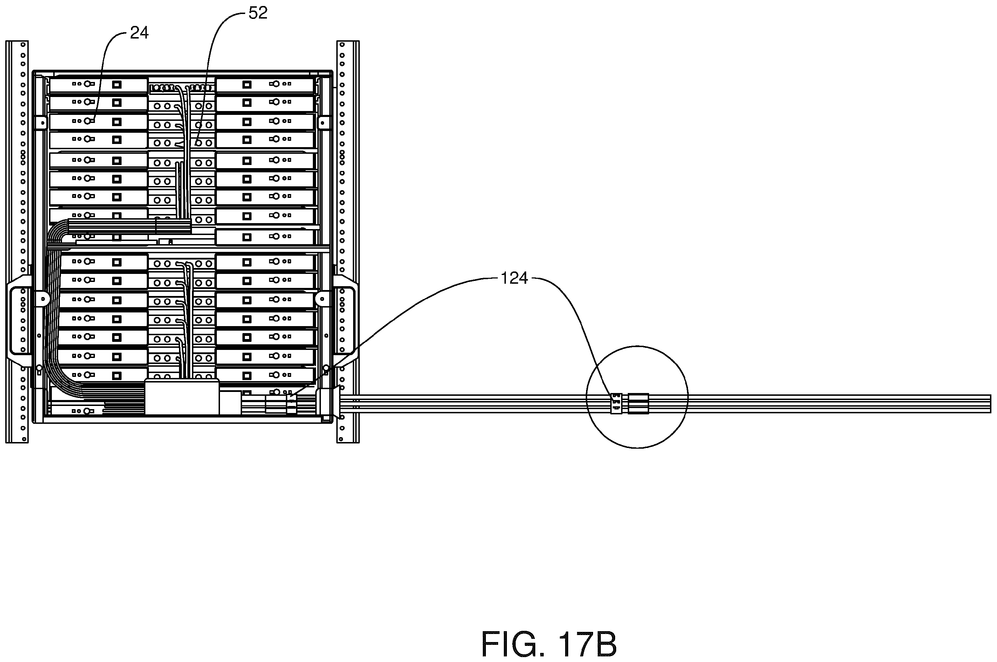

Figures 17A and 17B depict a visual identification system. The visual identification system may be used for identifying splice cassettes 42 and corresponding ports in the patch panel 24. For example, the visual identification system may include identifiers located on the splice cassettes 42, ports in the patch panel 24, and/or on cables 50, 52.

As shown in Figure 17A, the splice cassette 42 may be slidably inserted and/or removed from the splice cabinet 26. The splice cassette 42 may include an identifier 124 that corresponds to ports in the patch panel 24. The identifier 124 may be alphanumeric. For example, in the case of four splice units 40, the splice unit 40 closest to the first surface of the ODF cabinet 10 may have an identifier "A," the splice unit 40 below "A" may have an identifier "B," the splice unit 40 below "B" may have an identifier "C," and the splice unit 40 below "C" may have an identifier "D," and so on. In an example where there are six splice cassette spaces in each splice unit 40, the splice cassette space closest to the third surface 16 of the ODF cabinet 10 may have an identifier "1," the next adjacent splice cassette space may have an identifier "2," the next adjacent splice cassette space may have an identifier "3," the next adjacent splice cassette space may have an identifier "4," the next adjacent splice cassette space may have an identifier "5," and the next adjacent splice cassette space may have an identifier "6." Continuing with this example, the splice cassette space closest to the third surface 16 of the ODF cabinet 10 in splice unit 40 closest to the first surface 12 of the ODF cabinet 10 may have an identifier "A1," corresponding to the splice unit "A" and the splice cassette space "1." While alphanumeric identifiers are described above and herein, any identifiers may be used. For example, colors, numbers, symbols, shapes, or any combination thereof may be used as part of the visual identification system.

As shown in Figure 17B, each cable plugged into a port in the patch panel 24 may include an identifier 124 corresponding to the identifier 124 of the respective splice cassette 42. For example, a cable may include the label "A1" if inserted into the corresponding splice cassette 42 labeled "A1."

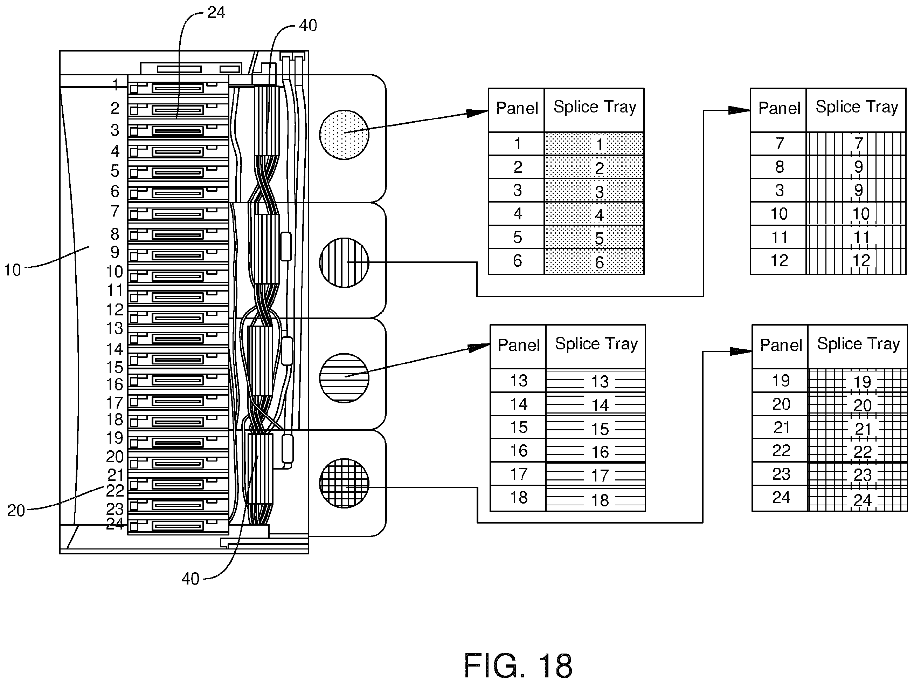

Figure 18 illustrates another example of a visual identification system. For example, each splice unit 40 may be surrounded by a structure with a visual identifier that corresponds with the visual identifier on each cable 50, 52 in each splice cassette space and/or splice cassette 42 within the splice unit 40. The patterns in Figure 18 may represent a different color, such as blue, orange, green, brown, etc. For example, the structure surrounding the splice unit 40 closest to the first surface 12 of the ODF cabinet 10 may be a first color, e.g., blue. The cables 50, 52 coupled to the splice cassettes 42 within that splice unit 40 may have a coating corresponding to the color of the structure of that splice unit 40, e.g., blue.

The visual identification system allows for easy identification of corresponding splice units 40, splice cassettes 42, and/or cables 50, 52. Accordingly, should cables 50, 52 need to be spliced, the cables 50, 52 can be easily identified and replaced in its corresponding location after splicing is complete. Additionally, this identification system can also be used to easily identify a damaged splice unit 40, splice cassette 42, and/or cable 50, 52 that needs to be repaired or replaced.

Although the implementations disclosed herein have been described with reference to particular features, it is to be understood that these features are merely illustrative of the principles and applications of the present implementations. It is therefore to be understood that numerous modifications, including changes in the sizes of the various features described herein, may be made to the illustrative implementations and that other arrangements may be devised without departing from the spirit and scope of the present implementations. In this regard, the present implementations encompass numerous additional features in addition to those specific features set forth in the paragraphs above.

## Claims

1. A tray body comprising:
a first surface, a second surface opposite the first surface, third and fourth surfaces coupled to at least one of the first or second surfaces, and a base surface coupled to one or more of the first, second, third, and fourth surfaces;
a cable entry point on at least one of the first, second, third, or fourth surfaces;
a first plurality of projections configured to secure a first set of cables, wherein at least some of the first plurality of projections extend towards a first midpoint and the remaining projections of the first plurality of projections extend away from the first midpoint, wherein a distance from the first midpoint and the first surface is greater than a distance from the first midpoint and the second surface; and
a second plurality of projections configured to secure a second set of cables, wherein at least some of the second plurality of projections extend towards a second midpoint and the remaining projections of the second plurality of projections extend away from the second midpoint, wherein a distance from the second midpoint and the second surface is greater than a distance from the second midpoint and the first surface.

2. The tray body of claim 1, further comprising a splice sleeve holder between the first and second midpoints, wherein the splice sleeve holder is adapted to secure a splice point of inbound and outbound cables; and/or
further comprising connection projections extending from an edge of the first, second, third, or fourth surface configured to secure a tray lid to the tray body.

3. A splice cassette comprising:
a first surface comprising an extension configured to be inserted into a channel on a top ledge of a splice cabinet; and
a second surface comprising a recess configured to receive a raised portion on a bottom ledge of the splice cabinet,
wherein:
the splice cassette is configured to be removably inserted into a splice unit within the splice cabinet, and
when inserted into the splice unit, the extension and recess are configured to secure the splice cassette into the splice unit.

4. The splice cassette of claim 3, further comprising:
a third surface coupled to the first and second surfaces; and
a fourth surface coupled to the first surface and extending towards the second surface, wherein a space between the second surface and an end of the fourth surface defines at least one cable entry point, and
further optionally comprising a tube clip covering the at least one cable entry point, wherein the tube clip is configured to secure cables.

5. The splice cassette of claim 3 or claim 4, further comprising a knob coupled to at least one of the first, second, third, or fourth surfaces, wherein the knob is adapted to engage with a hole in a splice cabinet to secure the splice cassette to at least one of the top or bottom ledges of the splice cabinet.

6. A system comprising:
an optical distribution frame (ODF) cabinet comprising:
a first surface;
a second surface opposite and substantially parallel to the first surface; and
third and fourth surfaces coupled to and extending between the first and second surfaces;
a patch panel removably positioned within the ODF cabinet; and
a splice cabinet removably positioned within the ODF cabinet, wherein the splice cabinet is positioned between the patch panel and one of the third and fourth surfaces of the ODF cabinet, the splice cabinet comprising:
at least one splice unit configured to receive at least one splice cassette, wherein the at least one splice cassette is oriented in a vertical position.

7. The system of claim 6, wherein the at least one splice cassette comprises:
a first surface, a second surface below and parallel to the first surface, and third and fourth surfaces coupled to at least one of the first and second surfaces of the at least one splice cassette;
inbound cables extending from an inbound cable entry point, wherein the inbound cables are routed around a first midpoint so that the inbound cables are adjacent to the second, third, and fourth surfaces of the at least one splice cassette; and
outbound cables extending from an outbound cable entry point, wherein the outbound cables are routed around a first midpoint so that the outbound cables are adjacent to the first, third, and fourth surfaces of the at least one splice cassette.

8. The system of claim 7, wherein the at least one splice cassette comprises outbound and inbound cables inserted in a unidirectional position.

9. The system of any one of claims 6 to 8, wherein the splice cabinet further comprises:
a first surface;
a second surface opposite and substantially parallel to the first surface of the splice cabinet;
a third surface coupled to and extending between the first and second surfaces of the splice cabinet;
a top ledge with at least one channel extending from the third surface of the splice cabinet, the at least one channel adapted to receive an extension on the at least one splice cassette; and
a bottom ledge with a raised portion adapted to be received within a recess in the at least one splice cassette,
wherein the top and bottom ledges are parallel to the first and second surfaces of the splice cabinet.

10. The system of claim 9, wherein the splice cabinet comprises a plurality of sets of top and bottom ledges in a vertical line adapted to support a respective splice unit between each set of top and bottom ledges.

11. The system of any one of claims 6 to 10, further comprising a support extension, wherein:
the support extension is removably couplable to the first surface of the ODF cabinet;
the support extension extends parallel to the first and second surfaces of the ODF cabinet; and
the support extension is configured to support a breakout kit, and
wherein optionally the support extension is configured to allow for an inbound cable to be routed in a direction from the first surface of the ODF cabinet to a second surface of the ODF cabinet.

12. The system of any one of claims 6 to 11, wherein a section of the patch panel comprises:
a first surface;
a second surface opposite and substantially parallel to the first surface;
a door hingedly connected to at least one of the first or second surfaces; and
a track on at least one of the first and second surfaces, wherein the track is configured to slidably receive the door.

13. The system of any one of claims 6 to 12, wherein the splice cabinet comprises a plurality of inbound cable hoops between the patch panel and the at least one splice unit, wherein the plurality of inbound cable hoops are adapted to guide inbound cables between the patch panel and the at least one splice cassette; and/or
wherein the splice cabinet comprises a plurality of outbound cable hoops between the at least one splice unit and the third or fourth surfaces of the ODF cabinet, wherein the plurality of outbound cable hoops are adapted to guide outbound cables in an upward direction out of the ODF cabinet.

14. The system of claim 13, wherein the splice cabinet comprises a plurality of top radius guides between the patch panel and the plurality of inbound cable hoops, the plurality of top radius guides adapted to support inbound cables around a bend.

15. The system of any one of claims 7 to 14, further comprising one or more identifiers associated with the inbound or outbound cables and a corresponding section of the patch panel or at least one splice cassette, the one or more identifiers providing an indication of the corresponding section of the patch panel or a corresponding splice cassette for the inbound or outbound cables; and
wherein optionally the one or more identifiers comprise at least one of an alphanumeric code, a color code, or a patterned code.
